# EUROPÄISCHE PATENTSCHRIFT

(11) **EP 1 177 826 B1**
(45) Veröffentlichungstag und Bekanntmachung des Hinweises auf die Patenterteilung: **21.11.2007**
(21) Anmeldenummer: 01116165.0
(22) Anmeldetag: 04.07.2001
(51) Int. Cl.: B01D 35/153, B01D 29/21

(54) **Auswechselbare Filterpatrone mit Stützkörper bzw. Flüssigkeitsfilter mit eben dieser Filterpatrone**
Replaceable filter cartridge with support member, liquid filter with that filter cartridge
Cartouche filtrante remplaçable avec support, filtre pour liquide avec cette cartouche filtrante

(30) Priorität: 21.07.2000 DE 10035555
(43) Veröffentlichungstag der Anmeldung: 06.02.2002
(73) Patentinhaber: Mann + Hummel GmbH, 71638 Ludwigsburg (DE)
(72) Erfinder: Binder, Walter, 71522 Backnang (DE); Mack, Klaus, 74239 Hardthausen (DE)
(74) Vertreter: Voth, Gerhard

(56) Entgegenhaltungen:
- EP-A- 0 972 554
- FR-A- 2 365 364
- GB-A- 1 275 651
- US-A- 5 413 712

## Beschreibung

### Stand der Technik

Die Erfindung betrifft einen Flüssigkeitsfilter mit einer auswechselbaren Filterpatrone mit einem ringförmig ausgebildeten Filtermedium, welches auf einem Stützkörper angeordnet ist, nach der Gattung des Patentanspruches 1.

Filterpatronen der eingangs beschriebenen Art sind z. B. aus der US 5 413 712 bekannt. Dem gemäß besteht die Filterpatrone aus einem Stützrohr, auf dem ein mit stirnseitigen Endscheiben versehenes Filtermedium angeordnet ist. Diese Filterpatrone ist auswechselbar, indem ein Deckel vom Filtergehäuse entfernt wird. Die eingebaute Filterpatrone wird durch eine Feder im Deckel axial auf einen zentral angeordneten Auslassstutzen gepresst, wobei eine Dichtmembran für eine axiale Dichtung zwischen Auslassstutzen und Endscheibe der Filterpatrone sorgt. Die Dichtmembran ist gleichzeitig als Rücklaufsperre für den Einlass des Filters ausgeführt.

Die Schrift GB-A-1 275 651 lehrt eine Filterpatrone für einen Flüssigkeitsfilter, mit einem ringförmig ausgebildeten Filtermedium mit abgedichteten Stirnseiten und einem Stützkörper, welcher in einem durch das Filtermedium gebildeten Innenraum angebracht ist. Der Stützkörper weist in einem Endbereich eine Aufnahme zur Befesdes Filterelements erschwert wird.

Aufgabe der Erfindung ist daher die Schaffung einer kostengünstigen und leicht zu montierenden Filterbaugruppe, die diese Filterpatrone enthält. Diese Aufgabe wird durch die Merkmale des Patentanspruches 1 gelöst.

### Vorteile der Erfindung

Der erfindungsgemäße Flüssigkeitsfilter weist einen Stützkörper auf, der durch ein ringförmig ausgebildetes Filtermedium umgeben ist. Der Stützkörper kann einen kreiszylindrischen oder auch elliptischen Querschnitt aufweisen. Er muss Durchbrechungen aufweisen, durch die die Flüssigkeit vom Filtermedium in den Innenraum des Stützkörpers fließen kann. Das Filtermedium wird derart auf den Stützkörper aufgebracht, dass dieses durch den Stützkörper vor einer Deformierung bewahrt wird. Das Filtermedium ist bevorzugt aus einem sternförmig gefalteten Filterpapier hergestellt. Alternativ können Vlieswickel oder mehrlagige Filtermedien von beliebiger Gestalt verwendet werden, wobei ihnen gemeinsam ist, dass sie den Stützkörper ringförmig umgeben.

Der erfindungsgemäße Flüssigkeitsfilter weist durch eine am Stützkörper angebrachte Aufnahme für eine Dichtmembran, in die zwei Funktionen integriert sind, auf. Zum einen weist die Dichtmembran eine Dichtkante auf, welche sich derart im Gehäuse abstützt, dass der Einlass abgedichtet ist. Auf diese Weise entsteht bei dem nicht durchströmten Filter eine Rücklaufsperre für Flüssigkeitsrückstände, die z. B. bei einem Ausbau des Filters im Gehäuse verbleiben kann. Wird der Einlass des Filters durch die Flüssigkeit angeströmt, so hebt sich die Dichtkante der Dichtmembran an, so dass die Flüssigkeit in den rohseitigen Gehäuseraum des Filters strömen kann.

Die zweite Funktion der Dichtmembran ist die direkte radiale Abdichtung zwischen dem Stützkörper und einem beliebigen Gehäuseteil, wodurch z. B. die Roh- und die Reinseite des Filters dichtend voneinander getrennt werden können. Besonders vorteilhaft ist die Abdichtung des Stützkörpers gegenüber einem Auslassstutzen, welcher den Innenraum des Stützkörpers, der gleichzeitig die Reinseite des Filters bildet, direkt mit dem Auslass verbindet. Hierbei ergibt sich eine besonders kompakte Ausführungsform des Flüssigkeitsfilters.

Durch die Gestaltung der Aufnahme am Stützkörper wird die Montage der Filterpatrone bei der Erstmontage bzw. bei einem Filterwechsel erleichtert. Die Filterpatrone kann mit der Dichtmembran vormontiert und anschließend in das Gehäuse eingesetzt werden. Dabei ist die Baugruppe der Filterpatrone als Ganzes leicht handzuhaben, wodurch Fehlermöglichkeiten bei der Montage minimiert werden. Gleichzeitig ist durch die radiale Abdichtung zwischen Mittelrohr und Gehäuse eine zuverlässige Funktion des Filters gewährleistet, da Axialtoleranzen für die Funktion der Dichtung unwesentlich sind. Außerdem kann eine zusätzliche Feder zur Erzeugung des axialen Anpressdruckes der Filterpatrone im Gehäuse eingespart werden. Hierdurch verringern sich gleichzeitig die Montagekräfte beim Aufschrauben des Deckels, wodurch dieses vereinfacht wird.

Gemäß einer weiteren Ausgestaltung der Erfindung ist die Dichtmembran mit dem Endbereich des Stützkörpers unlösbar verbunden. Dies kann z. B. durch Herstellung des Stützkörpers in Zweikomponententechnik erfolgen, wobei der Stützkörper z. B. aus Kunststoff und die Dichtmembran aus einem an diesem Kunststoff haftenden Elastomer in einer Form spritzgegossen werden. Eine andere Möglichkeit besteht darin, die Dichtmembran mit dem Stützkörper zu verkleben. In beiden Fällen kann die Zuverlässigkeit der Dichtung der Verbindung zwischen Stützkörper und Dichtmembran gesteigert werden, was zu einer höheren Zuverlässigkeit der Filterbaugruppe führt.

Eine weitere Ausgestaltung der Erfindung sieht vor, dass der Endbereich des Stützkörpers mit einer Verliersicherung zur Bildung eines Formschlusses zwischen Dichtmembran und Stützkörper versehen ist. Hierdurch kann gewährleistet werden, dass die Dichtmembran auch bei einem Ausbau der Filterpatrone zuverlässig an dieser hängen bleibt. Dies kann insbesondere dadurch erreicht werden, dass der Formschluss in Richtung der radialen Abdichtung zwischen Stützkörper und Gehäuse wirkt. So lange zwischen diesen Bauteilen eine erhöhte Reibung beim Ausbau aufgrund der Dichtwirkung vorliegt, wird auf diese Weise gleichzeitig der Formschluss zwischen Dichtmembran und Stützkörper erzwungen. Bei der ausgebauten Filterpatrone kann die Dichtmembran jedoch ohne Probleme ausgewechselt werden, da diese aus einem Elastomer besteht, so dass der Formschluss zur Demontage der Dichtmembran überwunden werden kann.

Eine weitere Ausgestaltung der Erfindung sieht vor, dass der Stützkörper das Filtermedium in axialer Richtung überragt. Hierdurch kann genügend Einbauraum für die Dichtmembran geschaffen werden, wodurch die Funktionszuverlässigkeit des Filters weiter erhöht wird.

Nach einer besonderen Ausgestaltung der Erfindung ist die Filterpatrone derart ausgeführt, dass das Filtermedium auswechselbar auf dem Stützkörper angeordnet ist. Dieses lässt sich insbesondere dadurch erreichen, dass die Stirnseiten des Filtermediums mit Folienendscheiben versehen werden, welche gleichzeitig eine Abdichtung der Stirnseiten des Filtermediums und eine radialen Abdichtung zum Stützkörper hin bewirken. Die Folienendscheiben können insbesondere aus Nitrilkautschuk hergestellt werden, wobei es sich hierbei um eine Mischung handelt, die nach einem Aushärtungsprozess eine genügende Restelastizität zur Abdichtung gegenüber dem Stützkörper aufweist. Durch den Aushärtungsprozess wird gleichzeitig eine dichte Verbindung zu den Stirnseiten des Filtermediums hergestellt.

Die beschriebene Ausgestaltung der Filterpatrone hat den Vorteil, dass bei einem Wechsel des Filtermediums ein minimaler Materialaufwand anfällt. Das Stützrohr sowie die Dichtmembran können mehrmals verwendet werden. Das Filtermedium sowie die Endscheiben sind absolut metallfrei, wodurch eine unproblematische Entsorgung z. B. durch Verbrennung erfolgen kann. Ist die Dichtmembran an dem Stützkörper unlösbar verbunden, so kann ein Auswechseln des Filtermediums auf dem Stützkörper über das gegenüber liegende Ende erfolgen. Der Stützkörper wird in das neue Filtermedium eingesteckt, wodurch sich eine neue dichtende Verbindung zwischen Endscheiben und Stützkörper ergibt.

Der Stützkörper ist vorteilhaft einstückig hergestellt. Dies lässt sich vorzugsweise durch Spritzgießen in Kunststoff bewerkstelligen. Hierdurch kann die Herstellung der Filterpatrone hinsichtlich der Kosten weiter optimiert werden.

Für die Baugruppe des Flüssigkeitsfilters ergibt sich eine besonders vorteilhafte Ausführungsform dadurch, dass das Gehäuse eine im wesentlichen zylindrische Grundform aufweist, wobei der Einlass und Auslass in der Bodenplatte des Gehäuses untergebracht sind. Die Bodenplatte weist weiterhin einen Schraubstutzen zur Befestigung des Flüssigkeitsfilters am Einbauort auf. Die Gestaltung entspricht somit im wesentlichen derjenigen herkömmlicher Wegwerffilter, so dass das Wechselfiltergehäuse anstelle von Wegwerffiltern nachgerüstet werden kann. Bei Erreichen des nächsten fälligen Filterwechsels kann dann der Flüssigkeitsfilter als Ganzes vom Einbauort geschraubt werden, wobei die Dichtmembran ein Auslaufen von Flüssigkeitsresten aus dem Filtergehäuse verhindert. Anschließend kann das Filtergehäuse in der optimalen Lage geöffnet werden, so dass das Restöl im Gehäuse verbleibt, während die Filterpatrone ausgewechselt wird. Nach Montage des Gehäuses kann der Flüssigkeitsfilter wieder am Einbauort montiert werden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: den Mittelschnitt durch den erfindungsgemäßen Flüssigkeitsfilter und
- Figur 2: das Detail X gemäß Figur 1 mit einer alternativen Ausgestaltung der Dichtmembran.

### Beschreibung der Ausführungsbeispiele

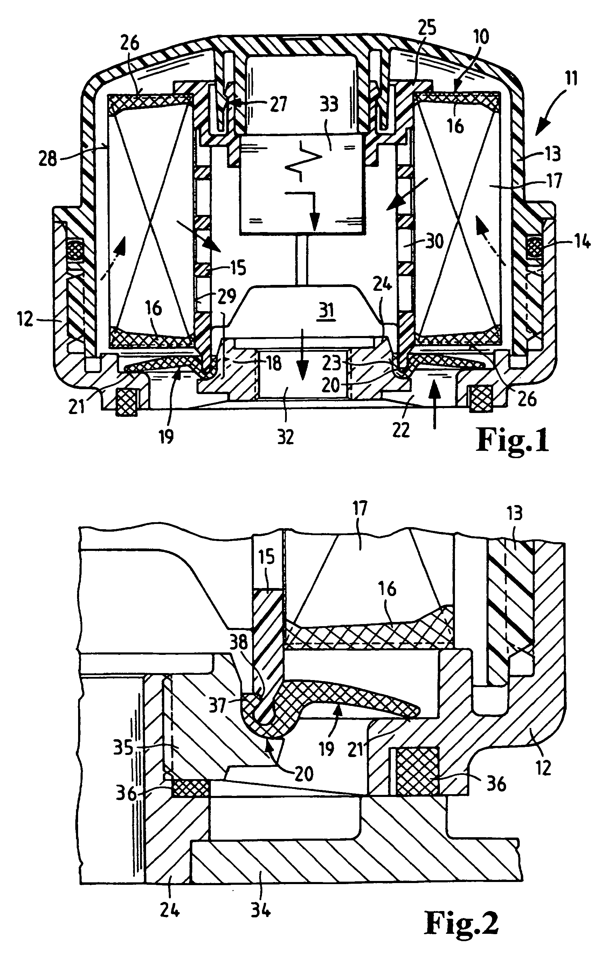

Der Flüssigkeitsfilter gemäß Figur 1 weist eine Filterpatrone 10 auf, die in einem Gehäuse 11, bestehend aus einer Bodenplatte 12 und einem Schraubdeckel 13, der über einen O-Ring dichtend mit der Bodenplatte verschraubt ist. Die Filterpatrone besteht aus einem Stützkörper 15, auf den ein mit Folienendscheiben 16 versehenes, sternförmig gefaltetes Filterpapier derart aufgeschoben ist, dass zwischen Stützkörper und Endscheibe eine radiale Abdichtung erfolgt. Weiterhin ist in einem Endbereich 18 des Stützkörpers eine Dichtmembran 19 in einer Aufnahme 20 montiert. Die Dichtmembran weist eine Dichtkante 21 auf, die sich in der Bodenplatte 12 abstützt und so zu einer Abdichtung der ebenfalls in der Bodenplatte befindlichen Einlässe 22 führt. Weiterhin weist die Dichtmembran eine Dichtfläche 23 zur radialen Abdichtung zwischen der Aufnahme 20 am Stützkörper 15 und einem Auslassstutzen 24, der in der Bodenplatte untergebracht ist, auf.

Der Stützkörper weist weiterhin einen Anschlag 25 für eine der Stirnseiten 26 des Filterpapiers auf. Dieses wird vor Montage der Dichtmembran 19 auf den Stützkörper aufgeschoben. Die gesamte Filterpatrone wird mithilfe einer Schnappverbindung 27, deren Wirkpartner am Stützkörper 15 und im Schraubdeckel 13 untergebracht sind, fixiert, wodurch bei Demontage des Schraubdeckels die Patrone im Deckel verbleibt.

Bei einem Betrieb des Filters strömt das Fluid entsprechend der angedeuteten Pfeile durch den Einlass 22 auf eine Rohseite 28 des Filters, durchströmt das Filterpapier 17 von außen nach innen und gelangt so auf eine Reinseite 29 des Filters, die über Öffnungen 30 im Stützkörper 15 mit einem Innenraum 31 verbunden sind. Von dort verlässt das gefilterte Fluid das Gehäuse 11 durch einen im Auslassstutzen 24 untergebrachten Auslass 32. Für den Fall eines unzulässig hohen Druckanstieges ist im Stützkörper 15 weiterhin ein Umgehungsventil 33 angeordnet (schematisch dargestellt). Dieses schließt die Rohseite 28 des Filters mit der Reinseite 29 kurz, so dass ein genügend großer Fluidfluss auch im Versagensfall des Filterpapiers gewährleistet ist. Eine solche Einrichtung ist z. B. wichtig, wenn der Fluidfilter wie im dargestellten Fall zur Reinigung des Schmieröls einer Brennkraftmaschine verwendet wird.

Der Flüssigkeitsfilter im montierten Zustand lässt sich der Figur 2 entnehmen, wobei der Einbauort, der z. B. der Motorblock 34 einer Brennkraftmaschine sein kann, angedeutet ist. In den Auslassstutzen 24 ist gleichzeitig ein Schraubstutzen 35 integriert, welcher durch Aufschrauben am Einbauort zu einer Fixierung des Filtergehäuses führt. Dichtringe 36 sorgen dabei für eine Abdichtung des Gehäuses gegenüber der Umgebung bzw. zwischen dem Einlass 22 und dem Auslass 32 des Flüssigkeitsfilters.

Weiterhin ist in Figur 2 eine alternative Ausgestaltung der Dichtmembran erkennbar. Diese weist zusätzlich eine Lippe 37 auf, welche mit einer Verliersicherung 38 in der Aufnahme 20 des Stützkörpers kommuniziert. Sobald der Stützkörper auf den Auslassstutzen 24 aufgeschoben ist, wird die Lippe 37 in die Verliersicherung 38 gedrückt. Bei einem Ausbau der Filterpatrone bleibt die Dichtmembran daher nicht im Gehäuse zurück, sondern wird mitsamt dem Stützkörper von der Bodenplatte des Gehäuses getrennt.

## Patentansprüche

1. Flüssigkeitsfilter, insbesondere Ölfilter für das Schmieröl einer Brennkraftmaschine, mit einer Filterpatrone (10) aufweisend
- ein ringförmig ausgebildetes Filtermedium, insbesondere ein sternförmig gefaltetes Filterpapier (17), mit abgedichteten Stirnseiten (26);
- einen Stützkörper (15), welcher in einem durch das Filtermedium gebildeten Innenraum (31) zu dessen Abstützung angebracht ist,
- wobei der Stützkörper (15) in einem Endbereich (18) eine Aufnahme (20) zur Befestigung einer als Rücklaufsperre dienenden Dichtmembran (19) aufweist,
- wobei die eine Dichtkante (21) zur Abstützung im Flüssigkeitsfilter und Verschluss von dessen Einlass (22) dient; und
- eine zusätzliche Dichtfläche (23) zur direkten radialen Abdichtung des Stützkörpers (15) gegenüber dem Gehäuse (11) des Flüssigkeitsfilters
**dadurch gekennzeichnet, dass**
die Filterpatrone (10) auswechselbar und ohne Feder zur Erzeugung eines axialen Anpressdrucks im Gehäuse (11) des Flüssigkeitsfilters angeordnet ist.

2. Flüssigkeitsfilter nach Anspruch 1, **dadurch gekennzeichnet, dass** die als Rücklaufsperre dienende Dichtmembran (19) unlösbar mit dem Endbereich (18) des Stützkörpers verbunden ist.

3. Flüssigkeitsfilter nach Anspruch 1, **dadurch gekennzeichnet, dass** der Endbereich (18) des Stützköpers (15) mit einer Verliersicherung (38) zur Bildung eines Formschlusses mit der Dichtmembran (19) versehen ist.

4. Flüssigkeitsfilter nach einem der vorherigen Ansprüche, **dadurch gekennzeichnet, dass** der Endbereich (18) des Stützkörpers (15) die angrenzende Stirnseite (26) des Filtermediums in axialer Richtung überragt.

5. Flüssigkeitsfilter nach einem der vorherigen Ansprüche, **dadurch gekennzeichnet, dass** das Filtermedium auswechselbar auf dem Stützkörper angeordnet ist.

6. Flüssigkeitsfilter nach einem der vorherigen Ansprüche, **dadurch gekennzeichnet, dass** zumindest eine der Stirnseiten (26) des Filtermediums mit einer Folienendscheibe (16), die insbesondere aus Nitrilkautschuk hergestellt ist, dichtend verbunden ist.

7. Flüssigkeitsfilter nach einem der vorherigen Ansprüche, **dadurch gekennzeichnet, dass** der Stützkörper einstückig hergestellt ist.

8. Flüssigkeitsfilter nach einem der vorherigen Ansprüche, **dadurch gekennzeichnet, dass** die zusätzliche Dichtfläche (23) der Dichtmembran (19) zur radialen Abdichtung des Stützkörpers (15) gegenüber einem Auslassstutzen (24) des Gehäuses (11) des Flüssigkeitsfilters geeignet ist.

9. Flüssigkeitsfilter nach einem der vorherigen Ansprüche, **dadurch gekennzeichnet, dass**
- das Gehäuse (11) eine im Wesentlichen zylindrische Grundform aufweist, wobei der Einlass (22) und der Auslass (32) in einer Bodenplatte (12) des Gehäuses untergebacht sind,
- die Bodenplatte (12) einen Schraubstutzen (35) zur Befestigung des Flüssigkeitsfilters am Einbauort aufweist und
- Dichtringe (36) zur Abdichtung des Gehäuses (11) zur Umgebung hin und zur Abdichtung zwischen Einlass (22) und Auslass (32) vorgesehen sind.

## Claims

1. Liquid filter, more especially an oil filter for the lubricating oil of an internal combustion engine, the said liquid filter having a filter cartridge (10) that includes
- an annular filter medium, more especially a filter paper (17) that is folded in the shape of a star, with sealed end faces (26);
- a support body (15), which is mounted in an interior (31) that is formed by the filter medium for the support of the said filter medium,
- wherein the support body (15) includes in an end region (18) an accommodating means (20) for securing a sealing diaphragm (19) that acts as a non-return blocking means,
- wherein the one sealing edge (21) is for support in the liquid filter and for closure of its inlet (22); and
- an additional sealing face (23) for the direct radial sealing of the support body (15) relative to the housing (11) of the liquid filter,
**characterised in that** the filter cartridge (10) is disposed in the housing (11) of the liquid filter so as to be replaceable and with no spring for generating an axial contact pressure.

2. Liquid filter according to claim 1, **characterised in that** the sealing diaphragm (19) that acts as the non-return blocking means is connected to the end region (18) of the support body so as to be non-detachable.

3. Liquid filter according to claim 1, **characterised in that** the end region (18) of the support body (15) is provided with a retaining device (38) for forming a positive fit with the sealing membrane (19).

4. Liquid filter according to one of the preceding claims, **characterised in that** the end region (18) of the support body (15) protrudes over the adjacent end face (26) of the filter medium in the axial direction.

5. Liquid filter according to one of the preceding claims, **characterised in that** the filter medium is disposed so as to be replaceable on the support body.

6. Liquid filter according to one of the preceding claims, **characterised in that** at least one of the end faces (26) of the filter medium is sealingly connected to a foil end disc (16), which more especially is produced from nitrile rubber.

7. Liquid filter according to one of the preceding claims, **characterised in that** the support body is produced in one piece.

8. Liquid filter according to one of the preceding claims, **characterised in that** the additional sealing face (23) of the sealing diaphragm (19) is suitable to seal the support body (15) in a radial manner relative to an outlet connection piece (24) of the housing (11) of the liquid filter.

9. Liquid filter according to one of the preceding claims, **characterised in that**
- the housing (11) has a substantially cylindrical basic form, wherein the inlet (22) and the outlet (32) are accommodated in a base plate (12) of the housing,
- the base plate (12) includes a screw-type connection piece (35) for securing the liquid filter at the site of installation and
- sealing rings (36) are provided for sealing the housing (11) towards the surroundings and for providing a seal between inlet (22) and outlet (32).

## Revendications

1. Filtre à liquide notamment filtre à huile pour l'huile de graissage d'un moteur à combustion interne comportant une cartouche de filtre 10, ayant:
- un milieu filtrant de forme annulaire, notamment du papier filtre 17 plié en étoile avec des faces frontales 26 étanches,
- un organe d'appui 15 prévu dans le volume intérieur 31 formé par le milieu filtrant pour son appui,
- une zone d'extrémité 18 de l'organe d'appui 15 comportant un logement 20 pour fixer une membrane d'étanchéité 19 servant d'élément antiretour,
- une arête d'étanchéité 21 servant d'appui au filtre à liquide et des moyens de fermeture de son entrée 22, et
- une surface d'étanchéité supplémentaire 23 pour réaliser directement l'étanchéité radiale de l'organe d'appui 15 par rapport au boîtier 11 du filtre à liquide,
**caractérisé en ce que** la cartouche de filtre 10 est remplaçable et est installée sans ressort pour générer une pression axiale d'application dans le boîtier 11 du filtre à liquide.

2. Filtre à liquide selon la revendication 1, **caractérisé en ce que**
la membrane d'étanchéité 19 servant de clapet antiretour est reliée de manière solidaire à la zone d'extrémité 18 de l'organe d'appui.

3. Filtre à liquide selon la revendication 1, **caractérisé en ce que**
la zone d'extrémité 18 de l'organe d'appui 15 est munie d'une sécurité contre la perte 38 pour réaliser une liaison par la forme avec la membrane d'étanchéité 19.

4. Filtre à liquide selon l'une des revendications précédentes, **caractérisé en ce que** la zone d'extrémité 18 de l'organe d'appui 15 déborde dans la direction axiale, la surface frontale adjacente 26 du milieu filtrant.

5. Filtre à liquide selon l'une des revendications précédentes, **caractérisé en ce que** le milieu filtrant est installé de manière remplaçable sur l'organe d'appui.

6. Filtre à liquide selon l'une des revendications précédentes, **caractérisé en ce qu'**au moins une des faces frontales 26 du milieu filtrant est munie d'une rondelle d'extrémité en forme de film 16 reliée de manière étanche et réalisée notamment en caoutchouc nitryle.

7. Filtre à liquide selon l'une des revendications précédentes, **caractérisé en ce que** l'organe d'appui est réalisé en une seule pièce.

8. Filtre à liquide selon l'une des revendications précédentes, **caractérisé en ce que** la surface d'étanchéité supplémentaire 23 de la membrane d'étanchéité 19 permet d'assurer l'étanchéité radiale de l'organe d'appui 15 par rapport à un ajutage de sortie 24 du boîtier 11 du filtre à liquide.

9. Filtre à liquide selon l'une des revendications précédentes, **caractérisé en ce que**
- le boîtier 11 a une forme de base essentiellement cylindrique, l'entrée 22 et la sortie 32 étant réalisées dans une plaque de fond 12 du boîtier,
- la plaque de fond 12 comporte un ajutage de vissage 35 pour fixer le filtre à liquide à l'endroit de montage, et
- des joints d'étanchéité 36 réalisent l'étanchéité du boîtier 11 par rapport à l'environnement, et l'étanchéité entre l'entrée 22 et la sortie 32.
